# EUROPEAN PATENT APPLICATION

(11) **EP 2 782 005 A1**
(43) Date of publication of application: **24.09.2014**
(21) Application number: 14158305.4
(22) Date of filing: 07.03.2014
(51) Int. Cl.: G06F 9/44, G06F 9/45, G06F 11/36

(54) **Verifying state reachability in a statechart model having computer program code embedded therein**

(30) Priority: 18.03.2013 IN MU08102013
(71) Applicant: Tata Consultancy Services Ltd., Mumbai 400 021, Maharashtra (IN)
(72) Inventor: Metta, Ravindra Kumar, 411 013 Pune (IN); Madhukar, Kumar, 411 013 Pune (IN); Singh, Priyanka, 411 013 Pune (IN); R, Venkatesh, 411 013 Pune (IN)
(74) Representative: Lloyd, Patrick Alexander Desmond

(57) **Abstract**

Disclosed is method and system for verifying reachability of the states in a statechart model, where the statechart model is the combination statecharts and programmed instructions. The statechart model is transcribed into a first program code in a first programming language. Static analysis is performed upon the first program code to generate a master program code. The master program code comprises only information required for verifying reachability of the statechart model. The master program code is further translated into a second program code. Both, the master program code and the second program code is collated with a set of functions to generate first target program code and the second target program code respectively, where the set of functions are configured to encode an execution framework. Further, the execution framework is configured for verifying the reachability of the states in the statechart model by using "Simulation-based technique" and/or a "Model-based technique".

## Description

### TECHNICAL FIELD

The present subject matter described herein generally relates to verification of states in a statechart model and more particularly, relates to a system and a method for verifying state reachability in the statechart model having a computer program code embedded therein.

### BACKGROUND

For modeling the behavior of embedded systems, statecharts are generally used. These embedded systems are reactive in nature. Modeling frameworks, such as IBM® Rhapsody® framework are widely used in automotive industries for providing a development environment for professionals to develop Rhapsody Statechart models. These Rhapsody statechart models are mixture of statecharts and program codes. In general, the verification of state-transition diagrams is easier than the verification of the program codes. Therefore, the existing approaches or the available verification tools focus only on verifying the statecharts at the statecharts level itself. Thus, in order to verify the Rhapsody statechart models one has to simultaneously focus on both, the statecharts and the program codes which are embedded with the statecharts. Various other verification tools or model checkers are available in the market, but all of these focus either exclusively on statecharts or exclusively on program codes. Further, lot of tuning is also required to tune the statechart models with the available verification tools during the verification process. Therefore, due to the combination of the statecharts and the program codes, it becomes difficult and challenging to verifying the Rhapsody statechart models.

Another concern is that, the Rhapsody® framework does not allow the users to have programmatic access to its statechart models. Thus, due to the restriction in having the programmatic access, the translation of the Rhapsody statechart model into any other format is difficult. Hence, considering the above discussed concerns, a common representation of the Rhapsody statechart model is required upon which the verification can be conducted. Therefore, a need exists for a system and a method for converting the given Rhapsody statechart model into a common format and thereafter enabling a system and methods for performing the verification on that common format in order to verify reachability of the states in the Rhapsody statechart model.

### SUMMARY

This summary is provided to introduce aspects related to a system and methods for verifying reachability of one or more states in a Rhapsody statechart model and the concepts are further described below in the detailed description. This summary is not intended to identify essential features of the claimed subject matter nor is it intended for use in determining or limiting the scope of the claimed subject matter.

In one implementation, a system for verifying reachability of one or more states in a statechart model is disclosed, wherein the statechart model comprises a set of statecharts with set of programmed instructions embedded therein. The system comprises a processor and a memory coupled to the processor for executing a set of modules stored in the memory. The set of modules comprises a transcribing module, a static analysis module, a translating module, a collating module and a verification module. The transcribing module is configured to transcribe the statechart model into a first program code, wherein the first program code is in a first programming language. Then, the static analysis module is configured to perform static analysis upon the first program code to generate a master program code. The master program code comprises only the information required for verifying the reachability of the one or more states in the statechart model. Further, the translating module is configured to translate the master program code into a second program code, wherein the second program code is in a second programming language. The collating module is configured to collate the master program code and the second program code with a set of functions to obtain a first target program code and a second target program code respectively. The set of functions are configured to encode an execution framework as per the semantics of the statechart model. Thereafter, the verification module is configured to configure the execution framework to verify the reachability of the one or more states in the statechart model by enabling one of the approaches/techniques. The first approach is performed by providing a simulation module which comprises: an analyzer to statically analyze the first target program code to determine one or more event-sequences; and a simulator to sequentially feed one or more events from the one or more event-sequences to enable the reachability of the one or more states in the statechart model. The second approach is performed by enabling at least one model checker on the second target program code. The model checker is enabled by generating and invoking at least one driver for the model checker.

In another implementation, a method for verifying reachability of one or more states in a statechart model is disclosed. The statechart model further comprises a set of statecharts with a set of programmed instructions embedded therein. The method comprises multiple steps; one of a step is for transcribing the statechart model into a first program code, wherein the first program code is in a first programming language. Upon transcribing, a step is carried out for performing static analysis upon the first program code to generate a master program code. The master program code comprises only the information required for verifying the reachability of the one or more states in the statechart model. After generating the master program code, a step is performed for translating the master program code into a second program code, wherein the second program code is in a second programming language. Further, a step is performed for collating the master program code and the second program code with a set of functions to obtain a first target program code and a second target program code respectively. The set of functions are configured to encode an execution framework as per the semantics of the statechart model. Thereafter, a step for configuring the execution framework is performed to verify the reachability of the one or more states in the statechart model by enabling one of the approaches/techniques. The first approach is performed by providing a simulation module which is configured for: statically analyzing the first target program code to determine one or more event-sequences; and sequentially feeding one or more events from the one or more event-sequences to enable the reachability of the one or more states in the statechart model. And the second approach is performed by enabling at least one model checker on the second target program code, wherein the model checker is enabled by generating and invoking at least one driver for the model checker.

Yet in another implementation, computer program product having embodied thereon a computer program for verifying reachability of one or more states in a statechart model is disclosed. The statechart model further comprises a set of statecharts with a set of programmed instructions embedded therein. The computer program product comprises a program code for transcribing the statechart model into a first program code, wherein the first program code is in a first programming language. A program code is provided for performing static analysis upon the first program code to generate a master program code. The master program code comprises only the information required for verifying the reachability of the one or more states in the statechart model. Upon generating the master program code, a program code is further provided for translating the master program code into a second program code, wherein the second program code is in a second programming language. Thereafter, a program code for collating the master program code and the second program code with a set of functions to obtain a first target program code and a second target program code respectively is provided. The set of functions are configured to encode an execution framework as per the semantics of the statechart model. Thus, upon encoding the execution framework, a program code is provided for configuring the execution framework to verify the reachability of the one or more states in the statechart model by enabling any one of the approaches. The first approach is performed by providing a simulation module which is configured for: statically analyzing the first target program code to determine one or more event-sequences; and sequentially feeding one or more events from the one or more event-sequences to enable the reachability of the one or more states in the statechart model. And the second approach is performed by enabling at least one model checker on the second target program code, wherein the model checker is enabled by generating and invoking at least one driver for the model checker.

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system for reachability of one or more states in a statechart model is shown, in accordance with an embodiment of the present subject matter.
Figure 2 illustrates the system, in accordance with an embodiment of the present subject matter.
Figure 3 illustrates a method for verifying reachability of one or more states in a statechart model, in accordance with an embodiment of the present subject matter.
Figure 4 illustrates a method for verifying the reachability of one or more states in a statechart model using a "Simulation-based technique,".
Figure 5 illustrates a method for verifying the reachability of one or more states in a statechart model using a "Model-based technique"

### DETAILED DESCRIPTION

Systems and methods for verifying reachability of "one or more states" hereinafter referred as "states" in a statechart model have been disclosed. In automotive industry, the statechart model is generally used for modeling the behavior of embedded systems. The embedded system consists of several components and each of these components is reactive in nature. Further, the components in the embedded system need to satisfy some critical safety and security requirements. Since, the behavior of the embedded systems are modeled by using the statechart model, it is necessary to verify the reachability of states in the statechart model in order to check some safety and security requirements of the embedded system are being satisfied or not.

According to embodiments of the present invention, the statechart model comprises a set of statecharts with a set of programmed instructions embedded therein. One such type of statechart model is the Rhapsody statechart model, modeled on a Rhapsody modeling framework. The Rhapsody modeling framework is one of a most popular framework used in the automotive industry. The focus of the present invention is to verify the reachability of the states in the Rhapsody statechart model, wherein the Rhapsody statechart model is a combination of the set of statecharts and the set of programmed instructions. Due to the combination of the statecharts and the programmed instructions, verification of such Rhapsody statechart model becomes challenging. According to the embodiments of the present invention, two separate verification techniques have been proposed to verify said Rhapsody statechart model. The two separate verification techniques are "Simulation-based technique" and "Model-based technique". User may use any one or both of the verification techniques which scales better for their statechart models.

For implementing the above proposed verification techniques, the statechart model comprising the statecharts and the programmed instructions are transcribed or converted into a first program code. Both, the first program code generated after transcribing the statechart model and the programmed instructions already embedded with the statechart model are in a first programming language. Thus, the entire statechart model is converted into a code level i.e., the first program code.

Subsequent to the transcription of the statechart model, a static analysis is performed on the first program code for generating a master program code, wherein the master program code is also in the first programming language. The purpose for generating the master program code is to include only relevant information or details required for verifying the reachability of the states in the statechart model. While generating the master program code, various abstraction methods may be employed for abstracting the relevant information or the details from the first program code required for the reachability analysis. Further, the abstraction methods are also capable to eliminate such information or details from the first program code that do not affect the reachability analysis. Thus, the size of master program code gets reduced in relative to the first program code, as only the information that is required for the reachability analysis is considered while performing the static analysis.

In the next step, the master program code is translated into a second program code, wherein the second program code is in a second programming language. Thus, two level conversion or translation is performed over the statechart model. The first level of conversion is done when the statechart model was transcribed into the first program code and thereafter the first program code is further converted into the master program code, both the first program code and the master program code is in the first programming language. And, in the second level of conversion the master program code is converted into the second program code, wherein the second program code is in the second programming language.

After the two levels of conversion, the systems and the methods of the present invention are enabled for collating the master program code and the second program code with a set of functions to obtain a first target program code and a second target program code respectively, wherein the first target program code is in the first programming language and the second target program is in the second programming language. Further, the set of functions is generated in the second programming language, wherein the set of functions are configured to encode an execution framework as per semantics of the statechart model.

In the further step, the execution framework is configured for performing the reachability analysis of the statechart model by implementing the proposed verification techniques. According to the "Simulation-based technique", the first target program code is analyzed by an analyzer for determining one or more event-sequences that may lead to reach the desired states in the statechart model. The analyzer also referred as, a simulator generator is configured to generate a simulator in the first programming language. The simulator is further configured to sequentially feed one or more events from the one or more event-sequences to enable the reachability of the states in the statechart model.

Further, another verification technique i.e., the "Model-based technique" is employed over the second target program code. According to this technique, the second target program code generated after the second level of conversion from the statechart model is introduced in a model checker. The model checker is known tool and is generally used for verification of a program code which is in the second programming language. Thus, the model checker is enabled for verifying the second target program code once the second target program code is introduced in an acceptable format. Further, the model checker is enabled by generating and invoking at least one driver, wherein the driver is enabled for introducing the second target program code into the model checker.

Thus, the user may select or use any one or both of the above discussed techniques proposed according to the embodiments of the present invention, which works better for verifying state reachability in the statechart model.

While aspects of described system and method for verifying reachability of states in a statechart model may be implemented in any number of different computing systems, environments, and/or configurations, the embodiments are described in the context of the following exemplary system.

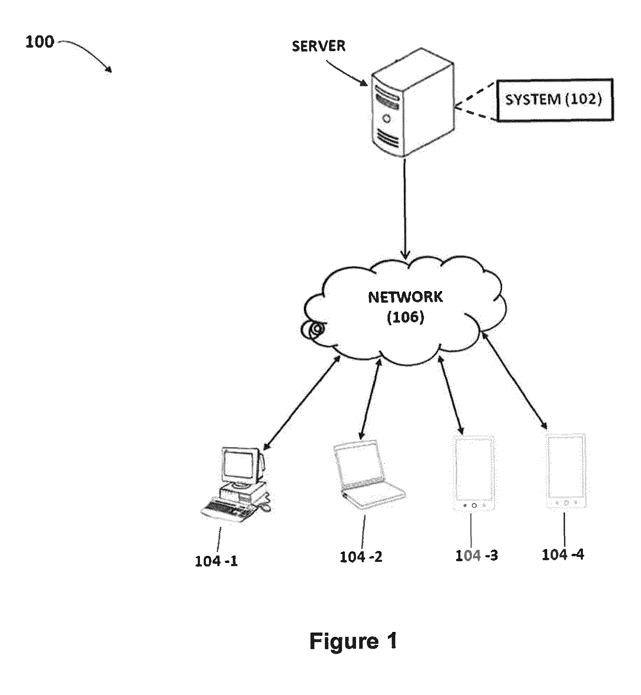

Referring now to Figure 1, a network implementation 100 of system 102 verifying the reachability of the states in the statechart model is illustrated, in accordance with an embodiment of the present subject matter. In one embodiment, the system 102 is facilitated for verifying the reachability of the states in the statechart model, wherein the statechart model comprises a set of states and set of programmed instructions.

Although the present subject matter is explained considering that the system 102 is implemented for a user on a server, it may be understood that the system 102 may also be implemented in a variety of computing systems, such as a laptop computer, a desktop computer, a notebook, a workstation, a mainframe computer, a server, a network server, and the like. It will be understood that the system 102 may be accessed by multiple users through one or more user devices 104-1, 104-2...104-N, collectively referred to as user 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

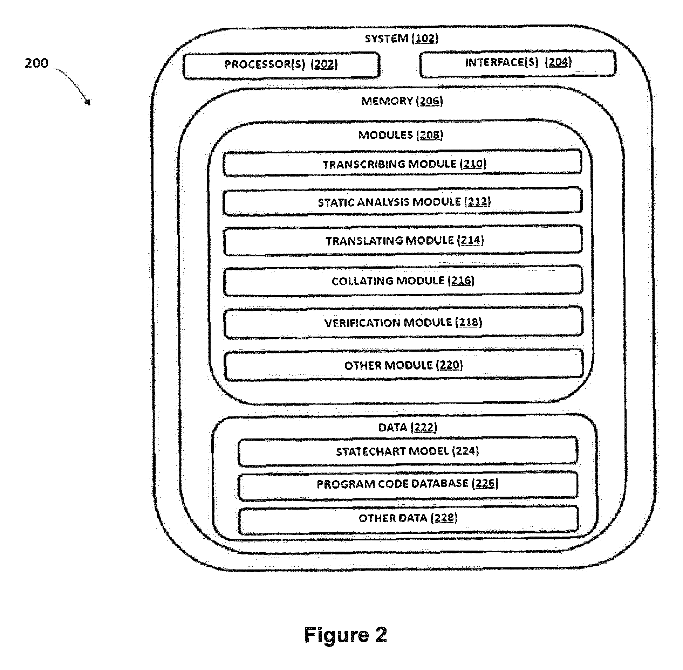

Referring now to Figure 2, the system 102 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions or modules stored in the memory 206.

The I/O interface 204 may include a variety of software and hardware interfaces, for example, a web interface, a graphical user interface, and the like. The I/O interface 204 may allow the system 102 to interact with a user directly or through the client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, a compact disks (CDs), digital versatile disc or digital video disc (DVDs) and magnetic tapes. The memory 206 may include modules 208 and data 222.

The modules 208 include routines, programs, objects, components, data structures, etc., which perform particular tasks or implement particular abstract data types. In one implementation, the modules 208 may include a transcribing module 210, a static analysis module 212, a translating module 214, a collating module 216, a verification module 218 and other modules 220. The other modules 220 may include programs or coded instructions that supplement applications and functions of the system 102.

The data 222, amongst other things, serves as a repository for storing data processed, received, and generated by one or more of the modules 208. The data 220 may also include statechart model 224 and program code database 226 and other data 228. The other data 228 may include data generated as a result of the execution of one or more modules in the other module 220.

In accordance with an embodiment of the present subject matter, the statechart model 224 is given which is to be verified, wherein the statechart model 224 is a combination of set of statecharts and set of programmed instructions. Two separate verification techniques have been proposed to verify the statechart model 224 i.e., "Simulation-based technique" and "Model-based technique". For implementing the above said verification techniques, several modules 208 have been introduced. The system 102 of the present invention is enabled for verifying state reachability of the statechart model 224 by using the modules 208. One of such modules is the transcribing module 210 which is configured to transcribe the statechart model 224 into a first program code. Both, the first program code and the set of programmed instructions embedded within the statechart model 224 are in the first programming language. The transcribing module 210 may be any C++ code generator.

According to embodiments of the present invention, the first program code is a "C++ program code" which is in a C++ programming language i.e., the first programming language. In other embodiments, the first program code generated after transcribing the statechart model 224 can also be a "C program code" or a "Java program code" in a C programming language and in a Java programming language respectively. Thus, the entire statechart model 224 (combination of statecharts and the programmed instructions) are converted into the "C++ program code" i.e., the first program code and is stored in a program code database 226 for further analysis.

On the first program code i.e., the "C++ program code", the static analysis module 212 is configured to perform static analysis for generating a master program code, wherein the master program code is also in the first programming language i.e., in the C++ programming language. The master program code is a "modified C++ program code". As a result of the static analysis performed on the "C++ program code", the "modified C++ program code" is generated having only such relevant information required for verifying the reachability of the states in the statechart model 224. During the static analysis, various abstraction techniques/ methods may be employed upon the "C++ program code" in order to consider only the relevant information required for the reachability analysis of the states in the statechart model 224. The abstraction techniques/ methods enables eliminating such information from the first program code i.e., the "C++ program code" that do not affect the reachability of the states in the statechart model 224, thus generating the "modified C++ program code" i.e., the master program code. After employing such abstraction techniques during the static analysis, the size of the master program code i.e., the "modified C++ program code" get reduced in relative to the first program code i.e., the "C++ program code". The master program code is stored at the program code database 226.

After that, according to the embodiments of the present invention, the translating module 214 is configured to translate the master program code i.e., the "modified C++ program code" into a second program code, wherein the second program code is in a second programming language. The second programming language is a C programming language. According to the embodiments of the invention, the translating module 214 may be any C++ program code to C program code translator. Thus, the master program code i.e., the "modified C++ program code" is translated into the "C program code". Thus, the statechart model 224 undergone two levels of conversion. The first level of the conversion is done by converting the statechart model 224 into the "C++ program code" and thereafter into the "modified C++ program code", and the second level of conversion happens when the "modified C++ program code" is further converted into the "C program code".

While translating the "modified C++ program code" into the "C program code" a set of functions is also generated. The set of functions is generated in the second programming language and called as "C functions".

Thereafter, the collating module 216 is configured to collate the master program code (modified C++ program code) and the second program code (C program code) with the set of functions to obtain a first target program code and a second target program code respectively. Whereas, the first target program code and the second target program code is in the first programming language (C++ programming language) and in the second programming language (C programming language) respectively. Further, the "C functions" is configured to encode an execution framework as per the semantics of the statechart model 224.

In the embodiments of the present invention, the second program code (C program code), the first target program code, the second target program code and the "C functions" are stored in the program code database 226.

In the next step, the verification module 218 is adopted to configure the execution framework to verify the reachability of the states in the statechart model 224 by implementing the proposed verification techniques i.e., the "Simulation-based technique" and the "Model-based technique". For performing the reachability analysis by using the "Simulation-based technique", a simulation module (not shown in figure) is configured for providing an analyzer. The analyzer is enabled for statically analyzing the first target program code to determine one or more event-sequences. The analyzer is also configured to generate a simulator in the first programming language. The simulator is further configured for sequentially feeding one or more events from the one or more event-sequences which is determined by the analyzer to enable the reachability of the states in the statechart model.

Further, for using the "Model-based technique" to perform the reachability analysis, the second target program code is considered. According to this verification technique, the second target program code is introduced into at least one model checker. The second target program code is an "optimized C program code" obtained by the collating module 216 during the collation of the master program code (modified C++ program code) and the second program code (C program code) with the set of functions.

Since, the second target program code is also in the "optimized C program code", various model checkers are available which may be used for verifying the "optimized C program code". The "optimized C program code" obtained as the second target program code is other than the "C program code" obtained as the second program code.

The model checkers used for the verification of the statechart model 224 may be one of a Simple Promela Interpreter (SPIN) and a C Bounded Model Checker (CBMC). Based on the model checker used for the reachability analysis, subsequent drivers are generated and invoked. The driver is generated in the specification language of the corresponding model checker selected for the reachability analysis. Finally, for performing the reachability analysis, the second target program code (optimized C program code) may be embedded in the driver generated and invoked... In an exemplary embodiment, considering a case, wherein the SPIN model checker is used; the system 102 is enabled for generating a SPIN driver for the SPIN model checker. The SPIN driver is generated based on the SPIN model checker's specification, which is the Promela specification. Promela (Process Meta Language) is a high-level language supported by SPIN model checker. The second target program code (optimized C program code) is then embedded into the SPIN driver generated and invoked in the Promela specification, which is the input language of the SPIN model checker. Similarly, in another exemplary embodiment, considering a case, wherein the CBMC model checker is used; the system 102 is enabled for generating the CBMC driver for the CBMC model checker. The CBMC driver is generated based on the CBMC model checker's specification, which may be a C code specification. The second target program code (optimized C program code) is then embedded into the CBMC driver generated and invoked in the C code specification, which is the input language of the CBMC model checker. The second target program code (optimized C program code) embedded into the SPIN driver or into the CBMC driver is then introduced into the SPIN model checker or into the CBMC model checker respectively. The SPIN model checker or the CBMC model checker can then be utilized for verifying the reachability of the states in the statechart model 224. It should be noted that the systems and the methods of the present invention is not limited to the SPIN and CBMC model checkers only and any another model checkers can also be used. Based on the model checker used for verifying the second target program code, corresponding drivers may be generated and invoked.

Both the verification techniques have their own approach for verifying the reachability of the states in the statechart model 224. Thus, based upon the statechart model the user may select any one or both of the above described verification techniques which scales better for their statechart model.

In one implementation, at first, the user may use the client device 104 to access the system 102 via the I/O interface 204. The users may register them using the I/O interface 204 in order to use the system 102. The working of the system 102 is explained above in detail in Figure 2. The system 102 explained above in the Figure 2 may be used for verification of such statechart model which is the combination of the statecharts and the programmed instructions.

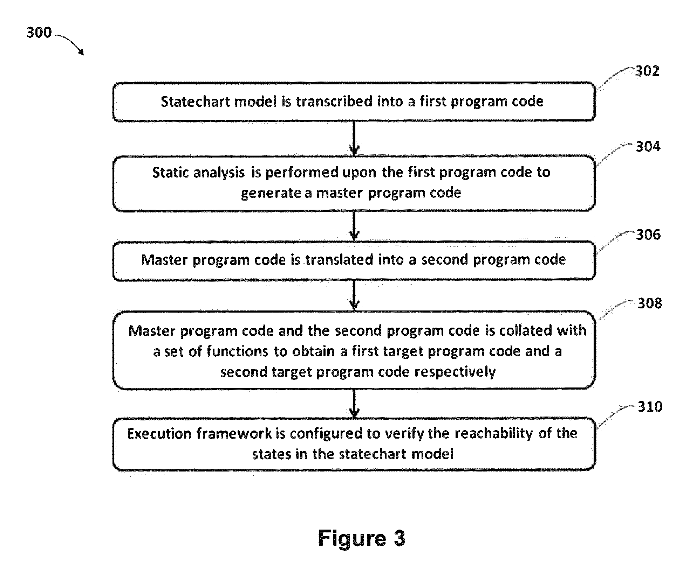

Referring now to Figure 3, the method for verifying reachability of the states in a statechart model is shown, in accordance with an embodiment of the present subject matter. The statechart model to be verified is the combination of statecharts and programmed instructions. The method 300 may be described in the general context of computer executable instructions. Generally, computer executable instructions can include routines, programs, objects, components, data structures, procedures, modules, functions, etc., that perform particular functions or implement particular abstract data types. The method 300 may also be practiced in a distributed computing environment where functions are performed by remote processing devices that are linked through a communications network. In a distributed computing environment, computer executable instructions may be located in both local and remote computer storage media, including memory storage devices.

The order in which the method 300 is described is not intended to be construed as a limitation, and any number of the described method blocks can be combined in any order to implement the method 300 or alternate methods. Additionally, individual blocks may be deleted from the method 300 without departing from the spirit and scope of the subject matter described herein. Furthermore, the method can be implemented in any suitable hardware, software, firmware, or combination thereof. However, for ease of explanation, in the embodiments described below, the method 300 may be considered to be implemented in the above described system 102.

At block 302, the statechart model 224 is transcribed into a first program code. The first program code is in the first programming language. According to the embodiments of the present invention, the first program code is a "C++ program code" in a C++ programming language. It may be noted that the first program code generated after transcribing the statechart model 224 can also be in a "C program code" or in a "Java program code".

At block 304, a static analysis is performed upon the first program code (C++ program code) to generate a master program code. The master program code is also in the first programming language. The master program code is a "modified C++ program code" having only such relevant information required for verifying the reachability of the states in the statechart model 224.

At block 306, the master program code is translated into a second program code, wherein the second program code is in a second programming language. The second programming language is a C programming language. Thus, the master program code (modified C++ program code) is converted into the second program code (C program code). Further, while translating the master program code into the second program code, a set of functions is also generated, wherein the set of functions is "C functions" generated in the second programming language.

At block 308, the master program code and the second program code is collated with the set of functions i.e., the "C functions" to obtain a first target program code and a second target program code respectively. The first target program code is in the first programming language and the second target program code is in the second programming language. Further, the set of functions obtained at step 306, is configured to encode an execution framework as per the semantics of the statechart model 224.

At block 310, the execution framework is configured to verify the reachability of the states in the statechart model.

According to the embodiments of the present invention, the two separate techniques may be used for verifying the reachability of the states in the statechart model 224. The two verification techniques used are "Simulation-based technique" and the "Model-based technique".

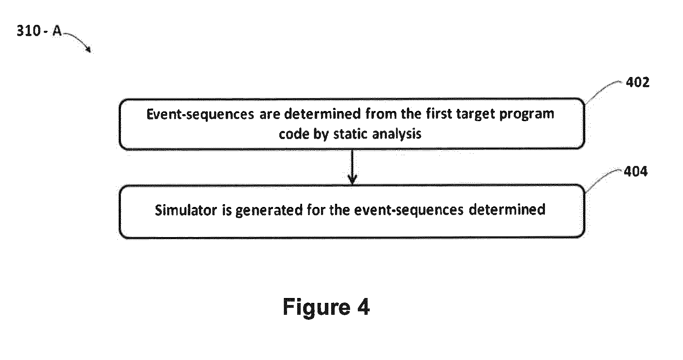

Referring to figure 4, a method 310 for verifying the reachability of the states in the statechart model using the "Simulation-based technique" is shown as 310-A, in accordance with an embodiment of the present invention.

At block 402, event-sequences are determined from the first target program code by static analysis. For determining the event-sequences, an analyzer is used.

At block 404, a simulator is generated for the event-sequences. The simulator is generated in the first programming language by the analyzer. Further, the simulator is enabled for feeding one or more events from the event-sequences in a preferred sequence. The one or more events fed by the simulator may lead to the desired states, and thus helps in verifying the reachability of the states in the statechart model 224.

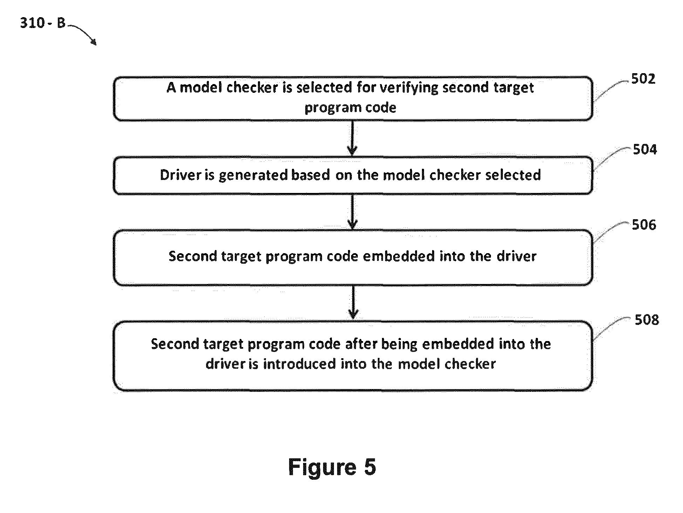

Referring now to figure 5, a method 310 for verifying the reachability of the states in the statechart model using the "Model-based technique" is shown as 310-B, in accordance with an embodiment of the present invention.

At block 502, a model checker is selected for verifying second target program code. In accordance with the present embodiments of the present invention, the model checker such as Simple Promela Interpreter (SPIN) and a C Bounded Model Checker (CBMC) may be selected.

At block 504, a driver is generated based on the model checker selected. According to the present scenario, the driver may be generated for the SPIN model checker and the CBMC model checker in SPIN and CBMC language specification respectively.

At block 506, the second target program code is embedded into the driver generated in step 504.

At block 508, the second target program code embedded into the driver is introduced into the model checker for verifying the state reachability.

### ADVANTAGES OF THE SYSTEM

The system 102 provides .two separate verification techniques for verifying state reachability of the statechart models, wherein the statechart models are the combination of statecharts and programmed instructions.

The "Simulation-based techniques" according to the embodiments of the present invention, is enabled to detect bugs in the statechart model while performing the verification process.

Providing a single verification platform for verifying both the states and the programmed instruction of the statechart model, thus eliminating the need for using separate verification tools each for the statechart and the programmed instructions.

Although implementations for methods and systems for verifying the statechart model have been described in language specific to structural features and/or methods, it is to be understood that the appended claims are not necessarily limited to the specific features or methods described. Rather, the specific features and methods are disclosed as examples of implementations for verifying the reachability of the states in the statechart model.

## Claims

1. A method for verifying reachability of one or more states in a statechart model, wherein the statechart model comprises a set of statecharts with a set of programmed instructions embedded therein, the method comprising:
transcribing, by a processor, the statechart model into a first program code, wherein the first program code is in a first programming language;
performing, by the processor, static analysis upon the first program code to generate a master program code, wherein the master program code comprises only the information required for verifying the reachability of the one or more states in the statechart model;
translating, by the processor, the master program code into a second program code, wherein the second program code is in a second programming language;
collating, by the processor, the master program code and the second program code with a set of functions to obtain a first target program code and a second target program code respectively, wherein the set of functions are configured to encode an execution framework as per the semantics of the statechart model; and
configuring, by the processor, the execution framework to verify the reachability of the one or more states in the statechart model by enabling one of:
a) a simulation module configured for:
statically analyzing the first target program code to determine one or more event-sequences; and
sequentially feeding one or more events from the one or more event-sequences to enable the reachability of the one or more states in the statechart model; and
b) at least one model checker on the second target program code, wherein the model checker is enabled by generating and invoking at least one driver for the model checker.

2. The method of claim 1, wherein the set of programmed instructions are in the first programming language.

3. The method of claim 2, wherein the first programming language may be C++ programming language, C programming language or Java programming language.

4. The method of claim 1, wherein the second programming language may be C programming language.

5. The method of claim 1, wherein the at least one model checker may be one of a Simple Promela Interpreter (SPIN) and a C Bounded Model Checker (CBMC).

6. A system for verifying reachability of one or more states in a statechart model, wherein the statechart model comprises a set of statecharts with set of programmed instructions embedded therein, the system comprising:
a processor; and
a memory coupled to the processor, the memory comprising a plurality of modules capable of being executed by the processor, wherein the plurality of modules comprises:
a transcribing module configured to transcribe the statechart model into a first program code, wherein the first program code is in a first programming language;
a static analysis module configured to perform static analysis upon the first program code to generate a master program code, wherein the master program code comprises only the information required for verifying the reachability of the one or more states in the statechart model;
a translating module configured to translate the master program code into a second program code, wherein the second program code is in a second programming language;
a collating module configured to collate the master program code and the second program code with a set of functions to obtain a first target program code and a second target program code respectively, wherein the set of functions are configured to encode an execution framework as per the semantics of the statechart model; and
a verification module configured to configure the execution framework to verify the reachability of the one or more states in the statechart model by enabling one of:
a) a simulation module further comprising:
an analyzer to statically analyze the first target program code to determine one or more event-sequences; and
a simulator to sequentially feed one or more events from the one or more event-sequences to enable the reachability of the one or more states in the statechart model; and
b) at least one model checker on the second target program code, wherein the model checker is enabled by generating and invoking at least one driver for the model checker.

7. The system of claim 6, wherein the set of programmed instructions are in the first programming language.

8. The system of claim 7, wherein the first programming language may be in C++ programming language, C programming language or Java programming language.

9. The system of claim 6, wherein the second programming language may be in C programming language.

10. The system of claim 6, wherein the at least one model checker may be one of a Simple Promela Interpreter (SPIN) and a C Bounded Model Checker (CBMC).

11. A computer program product having embodied thereon a computer program for verifying reachability of one or more states in a statechart model, wherein the statechart model comprises a set of statecharts with set of programmed instructions embedded therein, the computer program product comprising:
a program code for transcribing the statechart model into a first program code, wherein the first program code is in a first programming language;
a program code for performing static analysis upon the first program code to generate a master program code, wherein the master program code comprises only the information required for verifying the reachability of the one or more states in the statechart model;
a program code for translating the master program code into a second program code, wherein the second program code is in a second programming language;
a program code for collating the master program code and the second program code with a set of functions to obtain a first target program code and a second target program code respectively, wherein the set of functions are configured to encode an execution framework as per the semantics of the statechart model; and
a program code for configuring the execution framework to verify the reachability of the one or more states in the statechart model by enabling one of:
a) a simulation module configured for:
statically analyzing the first target program code to determine one or more event-sequences; and
sequentially feeding one or more events from the one or more event-sequences to enable the reachability of the one or more states in the statechart model; and
b) at least one model checker on the second target program code, wherein the model checker is enabled by generating and invoking at least one driver for the model checker.
